# EUROPEAN PATENT SPECIFICATION

(11) **EP 4 201 046 B1**
(45) Date of publication and mention of the grant of the patent: **24.06.2026**
(21) Application number: 21723715.5
(22) Date of filing: 04.05.2021
(51) Int. Cl.: H04L 69/06, H04L 47/125, H04L 9/40

(54) **DATA TRANSMISSION CONTROLLERS AND METHODS TO GENERATE DATA TRANSMISSION PACKETS ACCORDING TO MODIFIED QUIC PROTOCOL**
DATENÜBERTRAGUNGSSTEUERUNGEN UND VERFAHREN ZUR ERZEUGUNG VON DATENÜBERTRAGUNGSPAKETEN NACH DEM MODIFIZIERTEN QUIC-PROTOKOLL
COMMANDES DE TRANSMISSION DE DONNÉES ET PROCÉDÉS DE GÉNÉRATION DE PAQUETS DE DONNÉES SELON LE PROTOCOLE QUIC MODIFIÉ

(43) Date of publication of application: 28.06.2023
(73) Proprietor: Huawei Technologies Co., Ltd., Shenzhen, Guangdong 518129 (CN)
(72) Inventor: MIZRAHI, Tal, 80992 Munich (DE); COHEN, Reuven, 80992 Munich (DE); BELKAR, Ben-Shahar, 80992 Munich (DE)
(74) Representative: Epping - Hermann - Fischer
(86) International application number: PCT/EP2021/061712
(87) International publication number: WO 2022/233400

(56) References cited:
- WO-A1-2019/144836
- WO-A1-2021/001250
- CN-A- 112 737 737
- US-A1- 2019 199 835
- US-A1- 2019 229 903
- US-A1- 2019 356 589
- IYENGAR J ET AL: "QUIC: A UDP-Based Multiplexed and Secure Transport; draft-ietf-quic-transport-16.txt", QUIC: A UDP-BASED MULTIPLEXED AND SECURE TRANSPORT; DRAFT-IETF-QUIC-TRANSPORT-16.TXT; INTERNET-DRAFT: QUIC, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 16, 24 October 2018 (2018-10-24), pages 1 - 135, XP015129658, [retrieved on 20181024]

## Description

### TECHNICAL FIELD

The present disclosure relates generally to the field of networking and more specifically, to data transmission controllers and methods to generate data transmission packets according to a modified QUIC protocol.

### BACKGROUND

The transmission control protocol (TCP) is a widely used communication protocol that enables exchange of messages between computing devices in a network environment specifically using internet protocol. However, due to high latency in the transmission control protocol (TCP), a QUIC protocol is nowadays used as an internet transport protocol. The QUIC protocol generally runs over the user datagram protocol (UDP). Typically, the QUIC protocol is implemented at a user space of an operating system as opposed to the TCP, which is typically integrated into the operating system. The QUIC protocol is replacing the transport control protocol as the QUIC protocol provides a reliable transport for application protocols that are used to exchange information, such as a third version of the hypertext transfer protocol (HTTPv3).

The QUIC protocol was designed for software implementations, which in comparison to TCP, provides great flexibility to introduce new protocol features without requiring changes in the operating systems. However, as the QUIC protocol provides high security and enhanced recovery and congestion management, the software implementation of the QUIC protocol is very computationally intensive i.e., it requires high CPU utilization. Thus, there is a need for hardware implementation (i.e., hardware offloading of the QUIC protocol). Generally, in the QUIC protocol, QUIC packets are encapsulated with a user datagram protocol header, which appears as user datagram protocol packets to network routers, middle-boxes as well as to the operating system. In general, a header format of the QUIC protocol includes a number of variable-length fields, such as a connection identification (ID), version identification, and the like. However, a complex iterative parsing is required in order to process such variable-length fields. Further, the connection ID which is a first variable-length field of the QUIC protocol, is determined on a per-connection basis, and the connection ID is parse in an incoming QUIC packet. Thus, each endpoint of the QUIC protocol needs to keep a per-connection state that includes the length of the connection ID field in the QUIC protocol. Moreover, the QUIC protocol defines different types of frames, such as STREAM frames, acknowledgment (ACK) frames, and the like, which are included within the QUIC packets, and each frame has its own frame header. Moreover, when the QUIC packet is received, the beginning of the QUIC packet does not include all the frame headers, and additional frame headers may exist deep within the received QUIC packet. Therefore, additional QUIC packet may be required to receive all the frame headers. In addition, the conventional QUIC protocol does not define a specific order of such frames, and thus any combination of frames is possible within the received QUIC packet. Therefore, the aforesaid properties of the QUIC protocol make the QUIC protocol hardware-unfriendly and also makes the QUIC protocol challenging for hardware parsing. Moreover, the flexibility of the QUIC protocol also makes it difficult for hardware implementation because the hardware implementation would require a complex hardware logic and would be inefficient, and thus there exists a technical problem of hardware offloading of the conventional QUIC protocol. In certain scenarios, the QUIC protocol requires expensive resource consumption by hosts that run the QUIC protocol, but the QUIC protocol does not provide a generic application-program interface (API) for applications that require efficient resource consumption by using hardware offloading.

Therefore, in light of the foregoing discussion, there exists a need to overcome the aforementioned drawbacks associated with the hardware offloading of the QUIC protocol.

Document US 2019/356589 A1 describes an apparatus, a method and a computer program for generating data packets according to a transport protocol from an application buffer comprising a plurality of data streams. The apparatus comprises an input circuit configured to receive metadata comprising at least one of information about data packet types supported by the transport protocol, information about an offset and a length of the supported data packet types, and information about possible stream header start positions, possible payload start positions and possible offsets in the data streams. Further, the apparatus comprises a parsing circuit configured to identify offsets in an application buffer as possible segmentation points based on the metadata, to segment the application buffer at the possible segmentation points into segments for data packets, and to generate data packets according to the transport protocol based on the segments.

Document WO 2019/144836 A1 describes a data transmission method, an apparatus, and a system, relating to the technical field of communications. The method comprises: generating a plurality of QUIC data packets, each QUIC data packet comprising a QUIC connection identifier and packet indication information, the QUIC connection identifiers in the plurality of QUIC data packets being the same; and sending the plurality of QUIC data packets via at least two paths, the packet indication information in the QUIC data packets being used for indicating the packet sequence number of the QUIC data packets on the transmission path. By means of the data packets on the two paths for transmitting the same QUIC connection data being numbered respectively, the receiving terminal can respectively determine the transmission state of the data packets on each path, so that the data transmission is not affected by different transmission conditions on the different paths.

Document "QUIC: A UDP-Based Multiplexed and Secure Transport; draft-ietf-quic-transport-16.txt", XP015129658, discusses a UDP-based multiplexed and secure transport.

Document WO 2021/001250 A1 describes a proxy server receivng, from a sending device, a packet intended for a receiving device. The proxy server sends, to the receiving device, a promise frame indicating that the proxy server will deliver the packet to the receiving device later. The receiving device receives the promise frame from the proxy server, and sends an acknowledgement of the packet to the sending device via the proxy server. The proxy server forwards the acknowledgement of the packet from the receiving device to the sending device, and delivers the packet to the receiving device after having forwarded the acknowledgement to the sending device. The receiving device receives the packet from the proxy server after having sent the acknowledgement of the packet to the sending device via the proxy server.

Document US 2019/199835 A1 describes a method of opening a Quick User Datagram Protocol (UDP) Internet Connections (QUIC) socket on a computing platform, initializing QUIC packet processing of a hardware-based offloader, opening a QUIC connection to the offloader, and transmitting a first QUIC packet to the offloader over the QUIC connection. The hardware-based offloader encrypts and transmits the QUIC packet.

### SUMMARY

The present disclosure provides data transmission controllers to generate data transmission packets according to a modified QUIC protocol. The present disclosure further provides data transmission methods to generate data transmission packets according to the modified QUIC protocol. The present disclosure provides a solution to the existing problem of the hardware implementations of the conventional QUIC protocol. An objective of the present disclosure is to provide a solution that overcomes at least partially the problems encountered in the prior art and provide improved data transmission controllers and methods to generate data transmission packets according to the modified QUIC protocol for hardware offloading. The present invention is defined by the attached set of claims.

One or more objectives of the present disclosure is achieved by the solutions provided in the enclosed independent claims. Advantageous implementations of the present disclosure are further defined in the dependent claims.

In one aspect, the present disclosure provides a data transmission controller, wherein the data transmission controller is configured to generate one or more data transmission packets according to a modified QUIC protocol, by generating one or more fields in the one or more data transmission packets to have a fixed field-size and generating a predefined number of frames of different frame-types in a predefined frame-type order in the one or more data transmission packets.

The present disclosure provides an improved data transmission controller that is configured to generate one or more data transmission packets according to a modified QUIC protocol, also termed as an Offload variant of the QUIC (or OQUIC) protocol. As one or more data transmission packets include a fixed field-size for the fields and a predefined frame-type order for a predefined number of frames, thus the data transmission controller in comparison to conventional controllers does not require expensive resource consumption to execute hardware Offloading of the QUIC protocol (i.e., OQUIC). Further, due to the fixed size of the fields, the data transmission controller in comparison to conventional controllers does not require complex iterative parsing in order to process one or more fields and also does not need to keep a per-connection state that includes the length of the respective fields. Thus, the present disclosure is very less computationally intensive in comparison to conventional approach. Beneficially, the data transmission controller uses a subset of the functionality of the QUIC protocol in a way that enables hardware Offload variant of the QUIC protocol for efficient hardware implementations of the OQUIC protocol. Thus, the present data transmission controller implementing the OQUIC protocol for hardware Offloading which may potentially be standardized in the Internet Engineering Task Force (IETF) which may further influence and enhance a way people design, use, and manage the Internet.

The data transmission controller is further configured to limit a number of frames per data transmission packet in the one or more data transmission packets to a defined maximum number of frames per data transmission packet.

By virtue of limiting the number of frames per data transmission packet to the defined maximum number of frames per data transmission packet, hardware parsing of the modified QUIC protocol is manageable within the data transmission controller.

The data transmission controller is further configured to set the number of frames per data transmission packet to the defined maximum number of frames per data transmission packet.

By virtue of setting the number of frames per data transmission packet to the defined maximum number of frames per data transmission packet, hardware parsing of the modified QUIC protocol is manageable within the data transmission controller.

In a further implementation form, the data transmission controller is further configured to set all the fields of a field-type to fixed field-type size.

By virtue of setting all the fields of a field-type to fixed field-type size, the data transmission controller does not require a complex iterative parsing to process the fields.

In a further implementation form, the data transmission controller is further configured to include a version number in the one or more data transmission packets, the version number indicating a protocol version to be used.

It is advantageous to include a version number in one or more data transmission packets because the version number indicates a protocol version of the data transmission controller, which is used in the hardware implementation of the modified QUIC protocol based on the required applications.

In a further implementation form, the data transmission controller is further configured to include a mode in the one or more data transmission packets, the mode indicating whether the data transmission packets are to be encrypted or not.

As a mode in one or more data transmission packets is used to indicate whether the data transmission packets are to be encrypted or not. Therefore, the transmission controller with the hardware Offload variant of the QUIC protocol (also referred to as the modified QUIC or OQUIC protocol) is not limited to encryption, as compared to the conventional approach.

In a further implementation form, the data transmission controller further comprising a communication interface, wherein the data transmission controller is further configured to initiate a communication session with a communication device over the communication interface and to define communication parameters during initiation of the communication session, wherein the communication parameters comprises a field size and a frame-type order, and wherein the predefined number of frames is a limited number of frames negotiated on connection establishment with the communication device based on the communication parameters.

As the communication parameters comprises a field size and a frame-type order, therefore, the field size of the fields and the frame-type order of the frames could be fixed to the indicated size (or negotiated to a smaller value) based on the communication parameters during initiation of the communication session with a communication device. Beneficially, the predefined number of frames are constant after connection establishment negotiation, and also remain constant during the lifetime of the connection.

In a further implementation form, the communication parameters further comprises a maximum number of frames per data transmission packet.

A maximum number of frames per data transmission packet are beneficial for hardware parsing of the modified QUIC protocol within the data transmission controller.

In a further implementation form, the field size comprises one or more field-type sizes.

As the field size comprises one or more field-type sizes, thus the data transmission controller does not need to keep the field size (or per-connection state) that includes the field size of one or more fields.

In a further implementation form, at least one of the field-type sizes is zero (0).

Beneficially, at least one of the field-type sizes with zero sizes means the corresponding field doesn't exist, and the corresponding field-type can be reserved for future use.

In a further implementation form, the communication parameters further comprises a parsing depth.

As the communication parameters further comprises a parsing depth, thus the data transmission controller is able to negotiate the parsing depth for hardware parsing of the modified QUIC protocol.

In a further implementation form, the data transmission controller is further configured to negotiate one or more of the communication parameters with the communication device during initialization of the communication session.

By virtue of negotiating one or more of the communication parameters with the communication device during initialization of the communication session, the data transmission controller is flexible in negotiating on different aspects also.

In a further implementation form, the data transmission controller is further configured to execute an application-program interface (API) with two modes: a stream-aware mode and a stream-unaware mode.

It is advantageous to execute an application-program interface (API) with a stream-aware mode and a stream-unaware mode as the data transmission controller provides and enables the generic socket-like application-program interface, which can enable applications to run over the modified QUIC protocol (i.e., the OQUIC protocol) as a replacement to the conventional transmission control protocol (TCP), such as for the applications that require efficient resource consumption by using hardware offloading.

In a further implementation form, the stream-aware mode is based on the generated one or more data transmission packets.

As the stream-aware mode is based on the generated one or more data transmission packets, therefore new application (e.g., a third version of the hypertext transfer protocol) may benefit from the use of multiple QUIC streams (e.g., QUIC streams of data transmission packets) per connection, and use the stream aware application-program interface.

In a further implementation form, the application-program interface (API) is arranged for enabling applications designed for a transmission control protocol (TCP) and user datagram protocol (UDP) protocols to run on a modified QUIC protocol.

As the application-program interface (API) is arranged for enabling applications designed for a transmission control protocol and user datagram protocol (UDP) protocols to run on a modified QUIC protocol (i.e., the OQUIC protocol), therefore the application-program interface executes the legacy applications with no change for the stream-unaware mode.

In a further implementation form, the stream-unaware mode is a transmission control protocol (TCP) Socket application-program interface (API).

As the stream-unaware mode is a transmission control protocol Socket application-program interface, thus there is a generic application-program interface for the modified QUIC protocol, which is running for various applications over hardware offloaded implementation.

In a further implementation form, the stream-unaware mode is a user datagram protocol (UDP) Socket application-program interface (API).

As the stream-unaware mode is a user datagram protocol (UDP) Socket application-program interface, thus there is a generic application-program interface for the modified QUIC protocol, which is running for various applications over hardware offloaded implementation

In a further implementation form, the data transmission controller is configured to handle at least some of the generation in hardware.

It is advantageous to handle at least some of the generation in hardware because the data transmission controller defines possible extensions to the conventional QUIC protocol (or a next-generation of the transmission control protocol) that make it even more versatile in hardware implementations.

In a further implementation form, the data transmission controller is configured to receive a data transmission packet and to parse the received data transmission packet in hardware.

It is advantageous to parse the received data transmission packet in hardware because the data transmission controller defines a subset of the QUIC protocol that makes it hardware-friendly.

In a further implementation form, the data transmission controller is hardware-based.

As the data transmission controller is hardware-based, therefore the data transmission controller allows to significantly improve the performance of hardware-based servers and hosts that run the modified QUIC protocol.

In another aspect, the present disclosure provides a data transmission method performed by a data transmission controller for generating one or more data transmission packets comprises generating the one or more data transmission packets according to a modified QUIC protocol, by generating one or more fields in the one or more data transmission packets to have a fixed field-size and generating a predefined number of frames of different frame-types in a predefined frame-type order in the one or more data transmission packets. The method comprises further: limiting a number of frames per data transmission packet in the one or more data transmission packets (104A to 104N) to a defined maximum number of frames per data transmission packet, and setting the number of frames per data transmission packet to the defined maximum number of frames per data transmission packet

The disclosed data transmission method achieves all the technical effects of the data transmission controller of the present disclosure.

In yet another aspect, the present disclosure provides a data transmission, wherein the data transmission controller is configured to: receive incoming data, the incoming data comprising transmission control protocol (TCP) instructions or user datagram protocol (UDP) instructions and instructions according to an application-program interface (API); generate one or more data transmission packets for the modified QUIC protocol according to the TCP instructions or UDP instructions and based on the instructions according to the API, wherein the API comprises two modes: a stream-aware mode and a stream-unaware mode.

The disclosed data controller method achieves all the technical effects of the present disclosure.

In yet another aspect, the present disclosure provides a data transmission method for generating one or more data transmission packets according to the modified QUIC protocol, wherein the method comprises: receiving incoming data, the incoming data comprising transmission control protocol (TCP) instructions or user datagram protocol (UDP) instructions and instructions according to an application-program interface (API); generating one or more data transmission packets for the modified QUIC protocol according to the TCP instructions or UDP instructions and based on the instructions according to the API, wherein the API comprises two modes: a stream-aware mode and a stream-unaware mode.

The disclosed data transmission method achieves all the technical effects of the data transmission controller of the present disclosure.

It is to be appreciated that all the aforementioned implementation forms can be combined. It has to be noted that all devices, elements, circuitry, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof. It will be appreciated that features of the present disclosure are susceptible to being combined in various combinations without departing from the scope of the present disclosure as defined by the appended claims.

Additional aspects, advantages, features and objects of the present disclosure would be made apparent from the drawings and the detailed description of the illustrative implementations construed in conjunction with the appended claims that follow.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
FIG. 1A is a block diagram of a data transmission controller, in accordance with an embodiment of the present disclosure;
FIG. 1B is a block diagram of a data transmission controller, in accordance with another embodiment of the present disclosure;
FIG. 2 is a block diagram of a data transmission controller, in accordance with yet another embodiment of the present disclosure;
FIG. 3 is a flowchart of a data transmission method for generating one or more data transmission packets according to the modified QUIC protocol, in accordance with an embodiment of the present disclosure;
FIG. 4 is a flowchart of a data transmission method for generating one or more data transmission packets according to the modified QUIC protocol, in accordance with another embodiment of the present disclosure;
FIG. 5A is a block diagram of a X-over-Offload variant of QUIC (OQUIC) application-program interface, in accordance with an embodiment of the present disclosure; and
FIG. 5B is a block diagram of an X-over-Offload variant of QUIC (OQUIC) application-program interface, in accordance with another embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

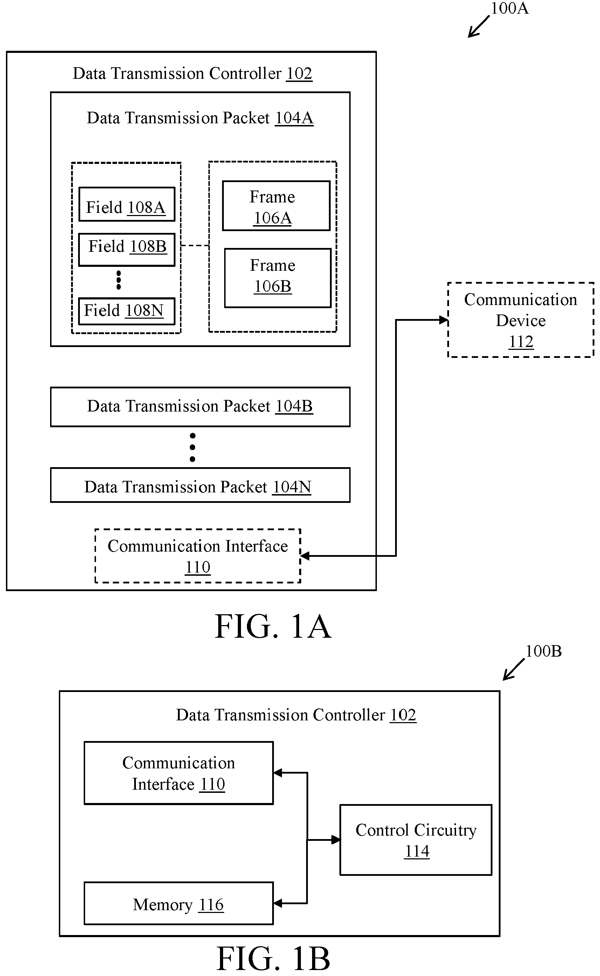

FIG. 1A is a block diagram of a data transmission controller, in accordance with an embodiment of the present disclosure. With reference to FIG.1A, there is shown a block diagram **100A** of a data transmission controller **102.** There is further shown one or more data transmission packets **104A** to **104N,** frames **106A** and **106B,** one or more fields **108A** to **108N,** a communication interface **110,** and a communication device **112.**

In one aspect, the present disclosure provides a data transmission controller **102,** wherein the data transmission controller **102** is configured to generate one or more data transmission packets **104A** to **104N** according to a modified QUIC protocol, by generating one or more fields **108A** to **108N** in the one or more data transmission packets **104A** to **104N** to have a fixed field-size and generating a predefined number of frames of different frame-types in a predefined frame-type order in the one or more data transmission packets **104A to 104N.**

The data transmission controller **102** include suitable logic, circuitry, interfaces and/or code that is configured to generate one or more data transmission packets **104A** to **104N** according to the modified QUIC protocol, also termed as Offload variant of the QUIC (or OQUIC) protocol. In an example, the data transmission controller **102** communicates by exchanging one or more data transmission packets **104A** to **104N.** The data transmission controller **102** may also be referred to as a data transmission device, a controller, a server, a client end, and the like.

One or more data transmission packets **104A** to **104N** and the frames **106A** and **106B** are basic units for data transmission used by the modified QUIC protocol. The data transmission packets **104A** to **104N** are smaller and similar structures of data which are broken down from a data chunk that is to be transmitted. Once received such data transmission packets **104A** to **104N** are reassembled to the data chunk.

The frames **106A** and **106B** carry control information and other data which is used by the data transmission controller **102** for communication between endpoints. Example of the frames **106A** and **106B** includes but not limited to a PING frame, a STREAM frames, an acknowledgment (ACK) frame, and the like.

The fields **108A** to **108N** are used during transmission of the one or more data transmission packets **104A** to **104N.** Examples of the fields **108A** to **108N** include but are not limited to source port, destination port, sequence number, acknowledgment number, header length, flags, window size, and the like.

The communication interface **110** includes suitable logic, circuitry, and/or interfaces that is configured to initiate a communication session with a communication device **112.** The communication device **112** includes suitable logic, circuitry, and/or interfaces that enables communication interface **110** to establish a communication session which for example a server. Examples of the communication interface **110** may include, but is not limited to, an antenna, a telematics unit, a radio frequency (RF) transceiver, one or more amplifiers, one or more oscillators, a digital signal processor, a coder-decoder (CODEC) chipset, and/or a subscriber identity module (SIM) card.

In operation, the data transmission controller **102** is configured to generate the one or more data transmission packets **104A** to **104N** according to a modified QUIC protocol, by generating one or more fields **108A** to **108N** in the one or more data transmission packets **104A** to **104N** to have a fixed field-size. The data transmission controller **102** is further configured to generate the one or more data transmission packets **104A** to **104N** by generating a predefined number of frames of different frame-types in a predefined frame-type order in the one or more data transmission packets **104A** to **104N.** In other words, the data transmission controller **102** uses the modified QUIC protocol, (or the OQUIC protocol) to generate one or more data transmission packets **104A** to **104N,** and also to generate the predefined number of frames with different frame-types, such as the frame **106A** and the frame **106B.** The predefined number of frames may be a limited number of frames negotiated on connection establishment, for example, with the communication device **112.** Beneficially as compared to the conventional approach, each of the frames are arranged in a predefined frame-type order within the one or more data transmission packets **104A** to **104N,** such as within the data transmission packet **104A,** as shown in FIG. 1A. In an example, the frames generated by the data transmission controller **102** have a fixed known order between the frame-types, for example, the STREAM frame always precedes the ACK frame. Therefore, a predefined frame-type combination of the frames is possible within one or more data transmission packets **104A** to **104N,** as compared to the conventional approach. In an implementation, each frame may be associated with one or more fields **108A** to **108N.** For example, the frame **106A** may be associated with field **108A,** and the frame **106B** may be associated with subsequent fields. Moreover, one or more fields **108A** to **108N** generated within the one or more data transmission packets **104A** to **104N** have a fixed field-size (or a constant size), such as the field **108A** generated by the data transmission controller **102** have a fixed field-size. In an example, the connection ID (for both source (SRC) and destination (DST)) field, a packet sequence number and other fields as generated by the data transmission controller **102** are considered with a fixed field-size (in bits), as shown in table 1. Therefore, the data transmission controller **102** does not require a complex iterative parsing in order to process the one or more fields **108A** to **108N.** Further, due to the defined size of the fields **108A** to **108N,** the data transmission controller **102** does not need to keep a per-connection state that includes the length of the respective fields **108A** to **108N,** as compared to the conventional approach. In addition, as the data transmission controller **102** is configured to generate one or more data transmission packets **104A** to **104N** according to the modified QUIC protocol, thus the data transmission controller **102** does not need expensive resource consumption to run the modified QUIC protocol. Moreover, the data transmission controller **102** uses a subset of the functionality of the QUIC protocol in a way that enables hardware offloading of the modified QUIC protocol. In an example, the hardware Offloading of the QUIC protocol is also referred to as the hardware Offload variant of the QUIC protocol (or OQUIC). In an example, the one or more fields **108A** to **108N** may be part of a modified QUIC header format, and may be part of the frame format for some specific frames of the frames **106A** and **106B.** There is represented the table 1 below which shows the fixed field-size of different fields such as the fields **108A** to **108N.** In the table 1 there is shown field name in a first column and corresponding fixed field-size in a second column. In an example, some fields such as "Length (Packet)" in the Table 1 are for the modified QUIC header fields. Further, some fields such as "Length (Frame)" in the Table 1 are for frame fields. Further, some fields are for specific frame types for example, the "ACK Delay" in the Table 1 is used in ACK frame format.

**Table 1**

| Field Name | Length (bits) |
|---|---|
| Stream ID | 32 |
| Offset | 64 |
| Length (Frame) | 32 |
| Length (Packet) | 32 |
| Largest Acknowledged (ACK) | 32 |
| ACK Delay | 32 |
| ACK Range Count | 16 |
| First ACK Range | 16 |
| Gap | 16 |
| ACK Range | 16 |
| ECN Counts | 64 |
| Final (RESET_STREAM) | 64 |
| MAX_DATA | 64 |
| MAX_STREAM_DATA | 64 |
| MAX_STREAMS | 32 |
| DATA_BLOCKED | 64 |
| STREAM_DATA_BLOCKED | 64 |
| STREAMS _BLOCKED | 32 |
| Sequence Number | 32 |
| Frame Type | 32 |
| Reason Phrase Length | 8 |
| Reason Phrase | Up to 2040 |
| Unpredictable Bits (Stateless Reset) | 190 |

In accordance with an embodiment, the data transmission controller **102** is further configured to limit a number of frames per data transmission packet in the one or more data transmission packets **104A** to **104N** to a defined maximum number of frames per data transmission packet. In other words, an upper bound is defined by the data transmission controller **102** for the number of frames, such as the frame **106A** and the frame **106B** in the one or more data transmission packets **104A** to **104N.** In an example, a maximum number of frames per data transmission packet is limited to two frames per data transmission packet **104A** to **104N.** For example, the frames **106A** and **106B** are limited by the data transmission controller **102** for the data transmission packet **104A,** and the subsequent two frames are limited by the data transmission controller **102** for the data transmission packet **104B.** Moreover, when the data transmission packets **104A** and **104B** are received by a receiver then the beginning of each of the data transmission packets **104A** and **104B** will include all headers of each frame. For example, the beginning of the data transmission packets **104A** includes the headers of the frames **106A** and **106B.** Similarly, the beginning of the data transmission packets **104B** includes the headers of the subsequent two frames. Therefore, no additional frames (and headers) will exist deep within the data transmission packets **104A** and **104B,** making it easy for hardware parsing of the modified QUIC protocol within the data transmission controller **102.** An example of a short header for a frame is shown below in table 2. There is represented the table 2 below which shows the beginning of a data transmission packet (e.g., the data transmission packet **104A**). The beginning of a data transmission packet (in row 1) includes a short header (in row 2), and no additional frame exists within the corresponding data transmission packet, as shown in row 2 of the table 2. There is further shown a destination connection ID (along with length in bits), a packet number (along with length in bits), and a payload of the corresponding data transmission packet.

**Table 2**

| 0 | 1 | 2 | 3 |
|---|---|---|---|
| 01234567890123456789012345678901 | | | |
| +-+-+-+-+-+-+-+ | | | |
| \|0\|1\|S\|R\|R\|K\|PP\| | | | |
| +-+-+-+-+-+-+-++-+-+-+-+-+-+-++-+-+-+-+-+-+-++-+-+- | | | |
| \| | Destination Connection ID (56) | | |
| | ... | | |
| +-+-+-+-+-+-+-++-+-+-+-+-+-+-++-+-+-+-+-+-+-++-+-+- | | | |
| \| | Packet Number (32) | | |
| | ... | | |
| +-+-+-+-+-+-+-++-+-+-+-+-+-+-++-+-+-+-+-+-+-++-+-+- | | | |
| \| | Payload (*) | | |
| | ... | | |
| +-+-+-+-+-+-+-++-+-+-+-+-+-+-++-+-+-+-+-+-+-++-+-+- | | | |

In accordance with an embodiment, the data transmission controller **102** is further configured to set the number of frames per data transmission packet to the defined maximum number of frames per data transmission packet **104A** to **104N.** In other words, a fixed number is defined by the data transmission controller **102** for the number of frames per data transmission packet. In an example, a maximum number of frames per data transmission packet **104A** to **104N** is set to two number of frames per data transmission packet **104A** to **104N,** such as the frames **106A** and **106B** are set (or fixed) by the data transmission controller **102** for the data transmission packet **104A,** and the like. Moreover, when one or more data transmission packets **104A** to **104N** are received by a receiver, then the beginning of each of the data transmission packets **104A** to **104N** will include all the headers of corresponding frames. Therefore, no additional frames (and headers) will exist deep within the data transmission packets **104A** to **104N,** making it easy for hardware parsing of the modified QUIC protocol within the data transmission controller **102.**

In accordance with an embodiment, the data transmission controller **102** is further configured to set all the fields **108A** to **108N** of a field-type to fixed field-type size. In other words, the field-type of all the fields **108A** to **108N** is set to the fixed field-type size. Thus, different fields **108A** to **108N** of different field-type will have fixed field-type sizes, and the data transmission controller **102** does not require a complex iterative parsing to process the all fields **108A** to **108N.**

In accordance with an embodiment, the data transmission controller **102** is further configured to include a version number in the one or more data transmission packets **104A** to **104N,** the version number indicating a protocol version to be used. In other words, one or more data transmission packets **104A** to **104N** generated according to the modified QUIC protocol includes the version number indicating a protocol version to be used. In an example, the version number indicating the protocol version is used to enable identification of the modified QUIC protocol of the present disclosure which is also referred to as hardware offload variant of the QUIC protocol (or OQUIC). Moreover, the version number indicates the protocol version of the hardware Offload variant of the QUIC protocol based on the required applications of the data transmission controller **102.**

In other words, in this embodiment, the data transmission controller **102,** implements the hardware Offload variant of the QUIC protocol that includes extensions and tweaks that are not defined in the standard specification of the QUIC protocol. Specifically, the hardware Offload variant of the QUIC protocol may use a different version number (or a new version) other than the standard QUIC protocol and may include new parameters, which are not used in the standard QUIC protocol.

In accordance with an embodiment, the data transmission controller **102** is further configured to include a mode in the one or more data transmission packets **104A** to **104N,** the mode indicating whether the data transmission packets **104A** to **104N** are to be encrypted or not. In other words, the mode (e.g., an unsecured mode of operation) included by the data transmission controller **102** in the one or more data transmission packets **104A** to **104N** indicates whether one or more data transmission packets **104A** to **104N** are to be encrypted or not. In an example, encryption of one or more data transmission packets **104A** to **104N** is disabled in the mode, such as in the unsecured mode of operation, which may be used for internal domains and confined networks. Beneficially in comparison with the conventional approach, the data transmission controller **102** with the hardware Offload variant of the QUIC protocol is not limited to encryption.

In other words, in this embodiment, the data transmission controller **102** allows interoperability with standard implementations of the modified QUIC protocol by configuring a standard implementation to a specific mode of operation that complies with the previous properties (or falling back to the standard QUIC protocol). For example, if most nodes (i.e. devices participating in a network) in the network support the hardware offloading of the QUIC protocol, then it is possible to use the modified QUIC protocol with hardware offloading. Moreover, connections with the nodes that do not support the hardware offloading of the QUIC protocol can be made using the standard QUIC protocol with a software implementation (i.e. conventional way of QUIC protocol). Therefore the data transmission controller **102** allows interoperability with a relatively small performance penalty.

In accordance with an embodiment, the data transmission controller **102** further comprises a communication interface **110.** The data transmission controller **102** is further configured to initiate a communication session with a communication device **112** over the communication interface **110.** The data transmission controller **102** is further configured to define communication parameters during initiation of the communication session, wherein the communication parameters comprises a field size and a frame-type order, and wherein the predefined number of frames is a limited number of frames negotiated on connection establishment with the communication device **112** based on the communication parameters. In other words, the data transmission controller **102** comprises the communication interface **110,** which is used to initiate the communication session (or connection establishment) with a communication device **112.** Moreover, during the initiation of the communication session, the communication parameters are defined by the data transmission controller **102,** where the communication parameters include the field size of the fields **108A** to **108N** and the frame-type order of the predefined number of frames, such as the frame **106A** and the frame **106B.** Therefore, the field size of the fields **108A** to **108N** and the frame-type order of the frames could be fixed to the indicated size, such as negotiated to a smaller value based on the communication parameters during initiation of the communication session with the communication device **112.** The communication parameters are further used to negotiate the predefined number of frames, such as the frame **106A** and the frame **106B** to a limited (or constant) number of frames on connection establishment with the communication device **112.** Beneficially in comparison with the conventional QUIC protocol, the predefined number of frames in the modified QUIC protocol are constant after connection establishment negotiation, and also remain constant during the lifetime of the connection.

In other words, the data transmission controller **102** is configured to define the communication parameters (or means) so as to negotiate the modified QUIC protocol properties based on the communication parameters, such as the field size (or length) of the fields **108A** to **108N** and the frame-type order of the frames, such as the frames **106A** and **106B.** In an example, the communication parameters can be negotiated during communication session initialization, and once negotiated, the communication parameters will remain fixed during the lifetime of the communication session (or connection). Further, based on the version as well as hardware capabilities of the modified QUIC protocol, the communication parameters will be fixed during the lifetime of all connections.

In accordance with an embodiment, the communication parameters further comprises a maximum number of frames per data transmission packet. In an example, after the initiation of the communication session, the data transmission packets **104A** to **104N** are generated based on the communication parameters, which comprises the maximum number of frames per data transmission packet, such as up to two frames **106A** and **106B** per data transmission packet. Moreover, when the data transmission packets **104A** and **104B** are received (e.g., by the communication device **112** or by the data transmission controller **102**), then a beginning of each of the data transmission packets **104A** and **104B** will include all headers of each frame. Therefore, in comparison to conventional approach, no additional frame (and headers) will exist deep within the data transmission packets **104A** and **104B,** which makes it easy for hardware parsing of the modified QUIC protocol within the data transmission controller **102.**

In accordance with an embodiment, the field size comprises one or more field-type sizes. Therefore, during the initiation of the communication session, the field size of one or more fields **108A** to **108N** could be fixed to the indicated size (or negotiated to a smaller value) based on the one or more field-type sizes. Moreover, the data transmission controller **102** need not keep the field size (or per-connection state) that includes the field size of one or more fields **108A** to **108N.**

In accordance with an embodiment, at least one of the field-type sizes is zero. In other words, at least one of the fields **108A** to **108N** can be negotiated on size zero based on the field-type sizes, which means the corresponding field doesn't exist, and the corresponding field may be reserved for future use.

In accordance with an embodiment, the communication parameters further comprises a parsing depth. As the communication parameters comprise the parsing depth, thus the data transmission controller **102** can negotiate the parsing depth for hardware parsing of the modified QUIC protocol.

In accordance with an embodiment, the data transmission controller **102** is further configured to negotiate one or more of the communication parameters with the communication device **112** during initialization of the communication session. As a result, the data transmission controller **102** with the hardware Offload variant of the QUIC protocol is flexible to negotiate on different aspects also.

In accordance with an embodiment, the data transmission controller **102** is further configured to execute an application-program interface (API) with two modes: a stream-aware mode and a stream-unaware mode. In other words, the data transmission controller **102** is configured to execute the application-program interface. Moreover, the application-program interface enables two modes of operation, such as the stream-aware mode and the stream-unaware mode. In an example, the stream-aware mode is aware of QUIC streams (e.g., QUIC streams of one or more data transmission packets **104A** to **104N**) and also allows an application (e.g., a web application) to define multiple QUIC streams. In contrast, the stream-unaware mode is not aware of the QUIC streams.

Therefore, the data transmission controller **102** with the Offload variant of the QUIC protocol is highly useful in performance-sensitive environments (i.e. which require low latency), for example, hypertext transfer protocol secure (HTTPS) web servers. Further, the Offload variant of the QUIC protocol may be used for non-HTTP applications also, that run over the conventional QUIC protocol. Moreover, the data transmission controller **102** provides and enables the generic socket-like application-program interface and enables applications to run over the modified QUIC protocol to replace the conventional transmission control protocol (TCP), such as for the applications that require efficient resource consumption by using hardware offloading.

In an implementation, the data transmission controller **102** executes the application-program interface that may be designed in a versatile way that allows various application types to run over the Offload variant of the QUIC protocol. Examples of such application types include but are not limited to remote direct memory access (RDMA) and various other applications that are either stream-aware or stream-unaware. Since QUIC streams are a notion that does not exist in transmission control protocol, thus it is expected that legacy applications may need to run transparently over the data transmission controller **102** with the Offload variant of the QUIC protocol in a stream-unaware manner. Moreover, the legacy applications such as secure shell protocol (SSH) (or file transfer protocol (FTP)) may run over the stream-unaware application-program interface in a way that allows smooth migration from existing implementations.

In accordance with an embodiment, the stream-aware mode is based on the generated one or more data transmission packets **104A** to **104N.** As the stream-aware mode is based on one or more data transmission packets **104A** to **104N,** thus new applications (e.g., a third version of the hypertext transfer protocol) may benefit from the use of multiple QUIC streams per connection and use the stream aware application-program interface. Moreover, the application is written in the stream-aware mode run over the modified QUIC protocol and knows the different application-program interface calls of the modified QUIC protocol specifics.

In accordance with an embodiment, the application-program interface (API) is arranged for enabling applications designed for a transmission control protocol (TCP) and user datagram protocol (UDP) protocols to run on a modified QUIC protocol. In other words, the application-program interface executes the stream-unaware mode, which runs the legacy applications with no change, i.e. the legacy applications consider they are running over a transmission control protocol (or a user datagram protocol socket). Moreover, the data transmission controller **102** executes a special application-program interface to bridge the differences to the modified QUIC protocol and vice versa back to the original on the receiver, such as the data transmission controller **102.**

In accordance with an embodiment, the stream-unaware mode is a transmission control protocol (TCP) Socket application-program interface (API). In an implementation, the transmission control protocol socket application-program interface may hide whether the QUIC protocol is offloaded by hardware or not in the stream-unaware mode, which is not aware of the QUIC protocol based streams. Thus, few connections, such as with another communication device, may be offloaded in hardware, while others connections may run in software. For example, QUIC standard connections are offloaded in software, and the Offload variant of the QUIC (OQUIC) connections are offloaded in hardware. Therefore, there is a generic application-program interface for the QUIC protocol that appears to the application as the transmission control protocol socket application-program interface, which is running for various applications over hardware offloaded implementation. Further, the application is using the transmission control protocol application-program interface which is later bridged to the OQUIC application-program interface, which is offloaded to the hardware.

In accordance with an embodiment, the stream-unaware mode is a user datagram protocol (UDP) Socket application-program interface (API). In an implementation, the user datagram protocol socket application-program interface may hide whether the modified QUIC protocol is offloaded by hardware or not in the stream-unaware mode. Thus, few connections, such as with other communication devices, may be offloaded in hardware, while other connections may run in software. For example, QUIC standard connections are offloaded in software, and the Offload variant of the QUIC connections is offloaded in hardware. Therefore, there is a generic application-program interface for the modified QUIC protocol that appears to the application as the user datagram protocol socket application-program interface.

In accordance with an embodiment, the data transmission controller **102** is configured to handle at least some of the generation in hardware. In other words, the data transmission controller **102** is configured to handle at least some of the generation in hardware Offload variant of the modified QUIC protocol. Thus, the data transmission controller **102** defines possible extensions to the conventional QUIC protocol (or a next-generation of transmission control protocol) that make it even more versatile in hardware implementations.

In accordance with an embodiment, the data transmission controller **102** is configured to receive a data transmission packet and to parse the received data transmission packet in a hardware. In other words, the data transmission controller **102** is configured to receive the data transmission packet, such as the data transmission packet **104A** from a communication device such as communication device **112.** Optionally, the beginning of the received data transmission packet includes all the headers and makes the data transmission controller **102** hardware-oriented. Moreover, the data transmission controller **102** defines a subset of the QUIC protocol that makes it hardware-friendly.

In accordance with an embodiment, the data transmission controller **102** is hardware-based. In other words, the data transmission controller **102** is efficient for hardware implementations of the modified QUIC protocol. Moreover, the data transmission controller **102** allows to significantly improve the performance of hardware-based servers and hosts that run the modified QUIC protocol.

Therefore, the data transmission controller **102** uses a subset of the functionality of the QUIC protocol in a way that enables hardware offloading of the QUIC protocol. As the data transmission controller **102** is configured to generate one or more data transmission packets **104A** to **104N** according to the modified QUIC (or OQUIC) protocol, thus the data transmission controller **102** does not need expensive resource consumption to run the modified QUIC protocol. Further, due to the fixed size of the fields **108A** to **108N,** the data transmission controller **102** does not require the complex iterative parsing in order to process the one or more fields **108A** to **108N,** and also does not need to keep a per-connection state that includes the length of the respective fields **108A** to **108N.** The hardware Offloading of the QUIC protocol is used for remote direct memory access over QUIC elastic transport (RoQET), which is an alternative to remote direct memory access (RDMA)-over-converged-Ethernet (RoCE) that provides reliability and low latency and can be deployed over a wide area network (WAN). Another potential use case of the hardware Offloading of the QUIC protocol is non-volatile-memory-express (NVMe)-over-QUIC, which may be an alternative for non-volatile-memory-express (NVMe)-over-fabric, and NVMe-over-TCP which suffers from the TCP issue that QUIC came to solve.

The present disclosure provides an efficient hardware implementations of the modidied QUIC protocol. The present disclosure further allows to significantly improve the performance of servers and hosts that run the modified QUIC protocol and provides a generic application-program interface to run various applications over hardware offloaded implementation. Thus, the present data transmission controller **102** implementing the hardware Offload variant of the QUIC protocol (also termed as OQUIC) may potentially be standardized in the Internet Engineering Task Force (IETF) which may further influence and enhance a way people design, use, and manage the Internet.

FIG. 1B is a block diagram of a data transmission controller, in accordance with another embodiment of the present disclosure. FIG. 1B is shown in conjunction with elements from FIG.1A. With reference to FIG.1B, there is shown a block diagram **100B** of the data transmission controller **102.** In an implementation, the data transmission controller **102** further includes a control circuitry **114,** a memory **116** and the communication interface **110.**

In this implementation, the operations executed by the data transmission controller **102** may be executed and controlled by the control circuitry **114.** Examples of the control circuitry **114** may include, but is not limited to, a microprocessor, a microcontroller, a complex instruction set computing (CISC) processor, an application-specific integrated circuit (ASIC) processor, a reduced instruction set (RISC) processor, a very long instruction word (VLIW) processor, a central processing unit (CPU), a state machine, a data processing unit, and other processors or circuitry.

The memory **116** includes suitable logic, circuitry, and/or interfaces that is configured to store one or more data transmission packets **104A** to **104N** generated by the data transmission controller **102.** Examples of implementation of the memory **116** may include, but are not limited to, Electrically Erasable Programmable Read-Only Memory (EEPROM), Dynamic Random Access Memory (DRAM), Random Access Memory (RAM), Read-Only Memory (ROM), Hard Disk Drive (HDD), Flash memory, a Secure Digital (SD) card, Solid-State Drive (SSD), and/or CPU cache memory. The communication interface **110** may also be referred to as a network interface that includes suitable logic, circuitry, and/or interfaces that is configured to communicate with the external devices like communication device **112** of FIG. 1A.

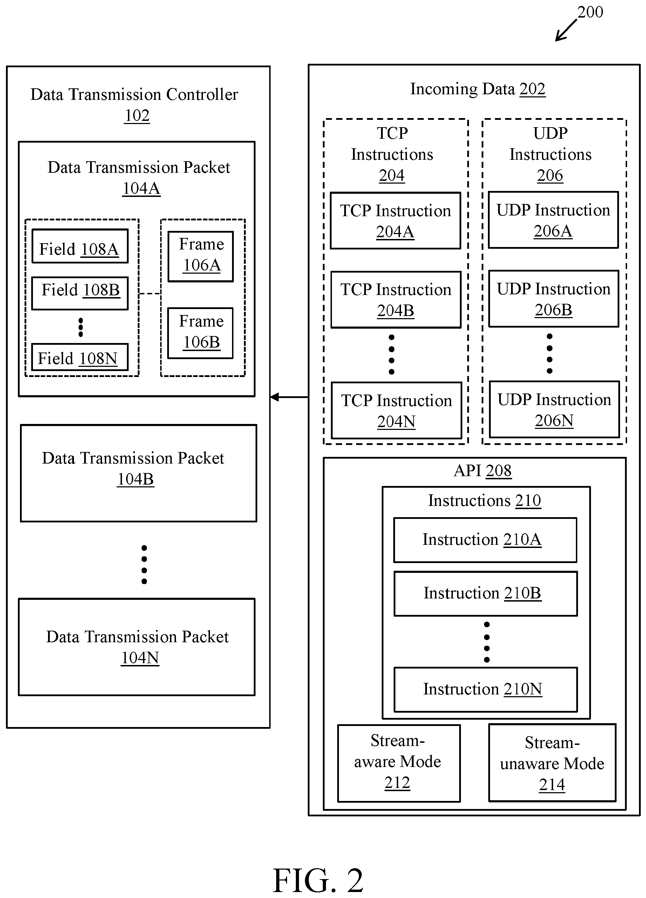

FIG. 2 is a block diagram of a data transmission controller, in accordance with yet another embodiment of the present disclosure. FIG. 2 is shown in conjunction with elements from the FIGs.1A and 1B. With reference to FIG.2, there is shown a block diagram **200** of the data transmission controller **102** and an incoming data **202.** The incoming data **202** includes transmission control protocol (TCP) instructions **204** or user datagram protocol (UDP) instructions **206.** The incoming data **202** further includes instructions **210** according to an application-program interface (API) **208.** The application-program interface **208** includes a stream-aware mode **212** and a stream-unaware mode **214.**

The incoming data **202** comprises the transmission control protocol instructions **204,** user datagram protocol) instructions **206,** and instructions **210** according to the application-program interface **208.** In an example, the incoming data **202** is received from a network sniffer, such as wire, where both the stream aware and stream unaware modes are OQUIC packets, such as the data transmission packets **104A** to **104N.** Further, the conversion of the incoming data **202** is done on a software/firmware/hardware (SW/FW/HW) layer that changes the transmission control protocol instructions **204** to OQUIC and on the network sniffer the packets, such as the data transmission packets **104A** to **104N** will look as OQUIC packets. In other words, on the network sniffer (or wire), the incoming data 202 includes OQUIC packets. Optionally, the transmission control protocol instructions **204,** user datagram protocol instructions **206,** and instructions **210** of the incoming data **202** corresponds to an order of sequences given to the data transmission controller **102.** The transmission control protocol instructions **204** further includes a plurality of transmission control protocol instructions **204A** to **204N,** and the user datagram protocol instructions **206** also includes a plurality of user datagram protocol instructions **206A** to **206N.** Similarly, the instructions **210** from the application-program interface **208** also includes a plurality of instructions **210A** to **210N.**

The stream-aware mode **212** corresponds to a mode which is aware of QUIC streams, and the stream-unaware mode **214** corresponds to mode which is not aware of the QUIC streams.

In another aspect, the present disclosure provides a data transmission controller **102,** wherein the data transmission controller **102** is configured to:
receive incoming data **202** (e.g. from an application layer), the incoming data **202** comprising transmission control protocol (TCP) instructions **204** or user datagram protocol (UDP) instructions **206** and instructions **210** according to an application-program interface (API) **208**;
generate one or more data transmission packets **104A** to **104N** for the modified QUIC protocol according to the transmission control protocol (TCP) instructions **204** or user datagram protocol (UDP) instructions **206** and based on the instructions **210** according to the application-program interface (API) **208,** wherein the application-program interface (API) **208** comprises two modes: a stream-aware mode **212** and a stream-unaware mode **214.**

In operation, the data transmission controller **102** is configured to receive the incoming data **202.** The incoming data **202** comprises the transmission control protocol instructions **204** or the user datagram protocol instructions **206,** and the instructions **210** according to the application-program interface **208.** The data transmission controller **102** is configured to generate one or more data transmission packets **104A** to **104N** for the modified QUIC protocol according to the transmission control protocol instructions **204** or the user datagram protocol instructions **206** and based on the instructions **210** according to the application-program interface **208,** wherein the application-program interface **208** comprises two modes, a stream-aware mode **212** and a stream-unaware mode **214.** In other words, the data transmission controller **102** receives the incoming data **202** and generates one or more data transmission packets **104A** to **104N** for the modified QUIC (i.e., OQUIC) protocol, such as to generate the data transmission packet **104A** for the modified QUIC protocol. In an implementation, the incoming data **202** is received from the application layer through a communication interface, and the incoming data **202** includes a field size for the fields **108A** to **108N** and a predefined frame-type order for the frames. As the incoming data **202** includes the transmission control protocol instructions **204** (or user datagram protocol instructions **206**) and the instructions **210** from the application-program interface **208.** Therefore, the data transmission controller **102** generates one or more data transmission packets **104A** to **104N** for the modified QUIC protocol according to the transmission control protocol instructions **204** (or user datagram protocol instructions **206**), and also based on instructions **210** from the application-program interface **208.** In an implementation, the application-program interface **208** is executed by the data transmission controller **102,** and the application-program interface **208** includes the stream-aware mode **212** and the stream-unaware mode **214.** Therefore, the data transmission controller **102** uses the modified QUIC protocol, such as the Offload variant of the QUIC protocol, which may be useful in performance sensitive environments, for example, hypertext transfer protocol secure (HTTPS) web servers. In addition, the Offload variant of the QUIC protocol may be used for non-HTTP applications also, that run over the conventional QUIC protocol as well. Thus, the data transmission controller **102** provides and enables the generic socket-like application-program interface **208,** which can enable applications to run over the modified QUIC protocol as a replacement to the conventional transmission control protocol (TCP), such as for the applications that require efficient resource consumption by using hardware offloading.

In an implementation, the data transmission controller **102** executes the application-program interface **208** that may be designed in a versatile way that allows various application types to run over the Offload variant of the QUIC protocol. Examples of the application types include but are not limited to remote direct memory access (RDMA) and various other applications that are either from the stream-aware mode **212** or from the stream-unaware mode **214.** Since QUIC streams are a notion that does not exist in transmission control protocol, thus it is expected that legacy applications may need to run transparently over the data transmission controller **102** with the Offload variant of the QUIC protocol in a stream-unaware manner. Moreover, the legacy applications, such as a secure shell protocol (SSH) (or file transfer protocol (FTP)) may run over the stream-unaware application-program interface in a way that allows smooth migration from existing implementations.

As the data transmission controller **102** is configured to generate one or more data transmission packets **104A** to **104N** for the modified QUIC protocol, thus the data transmission controller **102** does not need expensive resource consumption to run the modified QUIC protocol. Moreover, the data transmission controller **102** uses a subset of the functionality of the QUIC protocol in a way that enables hardware offloading of the QUIC protocol.

In accordance with an embodiment, the stream-unaware mode **214** is a transmission control protocol (TCP) Socket application-program interface (API). In an implementation, the transmission control protocol socket application-program interface may hide whether the modified QUIC protocol is offloaded by hardware (or not) in the stream-unaware mode **214,** which is not aware of the QUIC streams. Thus, few connections, such as connection with other communication devices, may be offloaded in hardware, while others connections may run in software. For example, QUIC standard connections are offloaded in software, and the Offload variant of the QUIC (OQUIC) connections are offloaded in hardware. Therefore, there is a generic application-program interface for the modified QUIC protocol that appears to the application as the transmission control protocol socket application-program interface, which is running for various applications over hardware offloaded implementation.

In accordance with an embodiment, the stream-unaware mode **214** is a user datagram protocol (UDP) Socket application-program interface (API). In an implementation, the user datagram protocol socket application-program interface may hide whether the modified QUIC protocol is offloaded by hardware or not in the stream-unaware mode **214.** Thus, few connections, such as connection with other communication devices, may be offloaded in hardware, while others connections may run in software. For example, QUIC standard connections are offloaded in software, and the Offload variant of the QUIC connections is offloaded in hardware. Therefore, there is a generic application-program interface for the modified QUIC protocol that appears to the application as the user datagram protocol socket application-program interface.

In accordance with an embodiment, the stream-aware mode **212** comprises instructions for generating the one or more data transmission packets **104A** to **104N** by generating one or more fields **108A** to **108N** in the one or more data transmission packets **104A** to **104N** to have a fixed field-size and generating a predefined number of frames of different frame-types in a predefined frame-type order in the one or more data transmission packets **104A** to **104N.** In other words, the data transmission controller **102** is configured to receive instructions from the stream-aware mode **212** of the application-program interface **208.** The instructions received from the stream-aware mode **212** are further used to generate the fixed field-size for the fields **108A** to **108N** and a predefined frame-type order for the predefined number of frames, such as the frame **106A** and the frame **106B.** Thereafter, one or more data transmission packets **104A** to **104N** is generated (e.g., for the OQUIC protocol), which includes the fixed field-size for the fields **108A** to **108N** and a predefined frame-type order for the predefined number of frames. For example, the data transmission packet **104A** is generated from the instructions received from the stream-aware mode **212,** and the data transmission packet **104A** includes the fixed field-size for the fields **108A** to **108N** and the predefined frame-type order for the predefined number of frames, as shown in FIG.2. Therefore, a predefined frame-type combination of predefined number of frames, such as the frame **106A** and the frame **106B** is possible within one or more data transmission packets **104A** to **104N.** Moreover, due to the fixed size of the fields **108A** to **108N,** the data transmission controller **102** does not require a complex iterative parsing in order to process the one or more fields **108A** to **108N** within the one or more data transmission packets **104A** to **104N.**

In accordance with an embodiment, the stream-aware mode **212** comprises instructions for limiting the number of frames per data transmission packet in the one or more data transmission packets **104A** to **104N** to a defined maximum number of frames per data transmission packet. In other words, the instructions from the stream-aware mode **212** are used by the data transmission controller **102** to define an upper bound for the number of frames in the one or more data transmission packets **104A** to **104N,** such as for the data transmission packet **104A** and **104B.** In an example, a maximum number of frames per data transmission packet is limited to two frames per data transmission packet **104A** to **104N.** For example, the frames **106A** and **106B** are limited by the data transmission controller **102** for the data transmission packet **104A,** and the subsequent two frames are defined by the data transmission controller **102** for the data transmission packet **104B.** Moreover, when the data transmission packets **104A** and **104B** are received by a receiver (e.g., a communication device), then the beginning of each of the data transmission packets **104A** and **104B** will include all headers of each frame. For example, the beginning of the data transmission packets **104A** includes the headers of the frames **106A** and **106B.** Similarly, the beginning of the data transmission packets **104B** includes the headers of the subsequent two frames. Therefore, no additional frames (and headers) will exist deep within the data transmission packets **104A** and **104B,** which makes it easy for hardware parsing of the modified QUIC protocol within the data transmission controller **102.**

In accordance with an embodiment, the stream-aware mode **212** comprises instructions for setting all the fields of a field-type to fixed field-type size. In other words, the instructions from the stream-aware mode **212** are used by the data transmission controller **102** to set the field-type of all the fields **108A** to **108N** to the fixed field-type size. Thus, different fields **108A** to **108N** of different field-type will have different fixed field-type sizes, and the data transmission controller **102** in comparison to conventional approach does not require a complex iterative parsing in order to process all fields **108A** to **108N.**

In accordance with an embodiment, the stream-aware mode **212** comprises instructions for handling at least some of the generation in hardware. As the instructions from the stream-aware mode **212** are used by the data transmission controller **102** to handle at least some of the generation in hardware. Therefore, the data transmission controller **102** defines possible extensions to the conventional QUIC protocol (or a next-generation of transmission control protocol) that make it even more versatile in hardware implementations.

Therefore, the data transmission controller **102** uses a subset of the functionality of the QUIC protocol in a way that enables hardware offloading of the QUIC protocol. The present disclosure provides efficient hardware implementations of the modified QUIC protocol. The present disclosure further allows to significantly improve the performance of servers and hosts that run the modified QUIC protocol and provides a generic application-program interface **208** to run various applications over hardware offloaded implementation. Thus, the present data transmission controller **102** implementing the hardware Offload variant of the QUIC protocol (also termed as OQUIC) may potentially be standardized in the Internet Engineering Task Force (IETF) which may further influence and enhance the way people design, use, and manage the Internet.

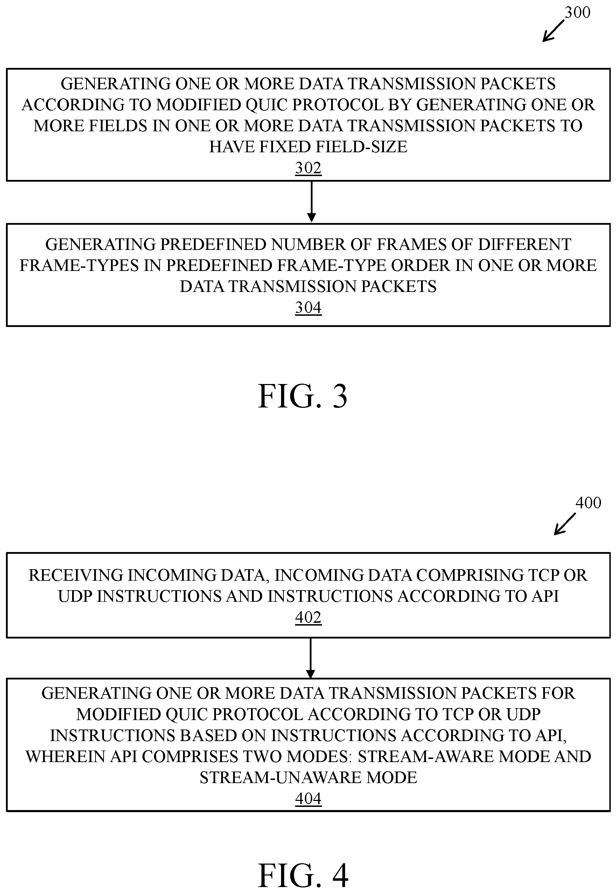

FIG. 3 is a flowchart of a data transmission method for generating one or more data transmission packets according to the modified QUIC protocol, in accordance with an embodiment of the present disclosure. FIG. 3 is shown in conjunction with elements from FIGs. 1A, 1B, and FIG. 2. With respect to FIG. 3, there is shown a data transmission method **300** for generating one or more data transmission packets **104A** to **104N** according to the modified QUIC protocol. The data transmission method **300** includes steps **302** and **304.**

In yet another aspect, the present disclosure provides a data transmission method **300** for generating one or more data transmission packets **104A** to **104N** comprises generating the one or more data transmission packets **104A** to **104N** according to a modified QUIC protocol, by generating one or more fields **108A** to **108N** in the one or more data transmission packets **104A** to **104N** to have a fixed field-size and generating a predefined number of frames of different frame-types in a predefined frame-type order in the one or more data transmission packets **104A** to **104N.**

The present disclosure provides the data transmission method **300** for generating one or more data transmission packets **104A** to **104N** according to the modified QUIC protocol. The data transmission method **300** uses a subset of the functionality of the QUIC protocol in a way that enables hardware offloading of the QUIC protocol. As the data transmission method **300** is configured to generate one or more data transmission packets according to the modified QUIC protocol, thus the data transmission method **300** does not need requires expensive resource consumption to run the modified QUIC protocol. Moreover, the data transmission method **300** uses a subset of the functionality of QUIC in a way that enables hardware offloading of the QUIC protocol.

At step **302,** the data transmission method **300** comprises generating the one or more data transmission packets **104A** to **104N** according to a modified QUIC protocol, by generating one or more of the fields **108A** to **108N** in the one or more data transmission packets **104A** to **104N** to have a fixed field-size. In other words, the data transmission method **300** uses the modified QUIC protocol for generating the fixed field-size for the fields **108A** to **108N.** Thereafter, one or more data transmission packets **104A** to **104N** are generated (e.g., for the modified QUIC protocol), which includes the fixed field-size for the fields **108A** to **108N.** For example, the data transmission packet **104A** includes the fixed field-size for the fields **108A** to **108N.** In an example, the connection ID (for both source (SRC) and destination (DST)) field, packet sequence number, and other fields as generated by the data transmission method **300** are considered with a defined (or fixed) field-size (in bits). Therefore, due to the defined size of the fields **108A** to **108N,** the data transmission method **300** does not require a complex iterative parsing in order to process the one or more fields **108A** to **108N** within the one or more data transmission packets **104A** to **104N.**

At step **304,** the data transmission method **300** further comprises generating a predefined number of frames of different frame-types in a predefined frame-type order in the one or more data transmission packets **104A** to **104N.** In other words, the data transmission method **300** uses the modified QUIC protocol for generating the predefined frame-type order for the predefined number of frames, such as the frame **106A** and the frame **106B.** Thereafter, one or more data transmission packets **104A** to **104N** are generated (e.g., for the modified QUIC protocol), which includes the predefined frame-type order for the predefined number of frames. Moreover, each frame is arranged in a predefined frame-type order within the one or more data transmission packets **104A** to **104N.** For example, the data transmission packet **104A** includes the predefined frame-type order for the frames **106A** and **106B.** Alternatively, the frames **106A** and **106B** generated by the data transmission method **300** have fixed known order between the frame-types, such as the STREAM frame always precedes the ACK frame. Therefore, a predefined frame-type combination of frames is possible within one or more data transmission packets **104A** to **104N,** which makes it hardware-friendly.

In accordance with an embodiment, the data transmission method **300** further comprises limiting a number of frames per data transmission packet in the one or more data transmission packets **104A** to **104N** to a defined maximum number of frames per data transmission packet. In other words, the data transmission method **300** comprises defining an upper bound for the number of frames, such as the frames **106A** and **106B** in the one or more data transmission packets **104A** to **104N.** In an example, a maximum number of frames per data transmission packet is limited to two frames per data transmission packet **104A** to **104N.** Therefore, no additional frames (and headers) will exist deep within the received data transmission packets 104A and 104B, making it easy for hardware parsing of the modified QUIC protocol within the data transmission controller 102.

In accordance with an embodiment, the data transmission method **300** further comprises setting the number of frames per data transmission packet to the defined maximum number of frames per data transmission packet **104A** to **104N.** In other words, the data transmission method **300** comprises defining an upper bound for the number of frames per data transmission packet. In an example, a maximum number of frames per data transmission packet is set to two number of frames per data transmission packet, making it easy for hardware parsing of the modified QUIC protocol within the data transmission controller **102.**

In accordance with an embodiment, the data transmission method **300** further comprises setting all the fields **108A** to **108N** of a field-type to fixed field-type size. In other words, the data transmission method **300** comprises setting the field-type of all the fields **108A** to **108N** to the fixed field-type size. Thus, different fields **108A** to **108N** of different field-type will have fixed field-type sizes, and the data transmission controller **102** does not require a complex iterative parsing to process the all fields **108A** to **108N.**

In accordance with an embodiment, the data transmission method **300** further comprises including a version number in the one or more data transmission packets **104A** to **104N,** the version number indicating a protocol version to be used. In other words, one or more data transmission packets **104A** to **104N** generated according to the modified QUIC protocol includes the version number indicating a protocol version to be used. In an example, the version number indicating the protocol version is used to enable identification of the modified QUIC protocol of the present disclosure which is also referred to as hardware offload variant of the QUIC protocol (or OQUIC).

In accordance with an embodiment, the data transmission method **300** further comprises including a mode in the one or more data transmission packets **104A** to **104N,** the mode indicating whether the data transmission packets **104A** to **104N** are to be encrypted or not. In other words, the mode (e.g., an unsecured mode of operation) included by the data transmission method **300** in the one or more data transmission packets **104A** to **104N** indicates whether one or more data transmission packets **104A** to **104N** are to be encrypted or not. In an example, encryption of one or more data transmission packets **104A** to **104N** is disabled in the mode, such as in the unsecured mode of operation, which may be used for internal domains and confined networks. Beneficially in comparison with the conventional approach, the data transmission method **300** with the hardware Offload variant of the QUIC protocol is not limited to encryption.

In accordance with an embodiment, the data transmission method **300** further includes a communication interface **110.** The data transmission method **300** further comprises initiating a communication session with a communication device **112** over the communication interface **110.** The data transmission method **300** further comprises defining communication parameters during initiation of the communication session, wherein the communication parameters comprises a field size and a frame-type order, and wherein the predefined number of frames is a limited number of frames negotiated on connection establishment with the communication device 112 based on the communication parameters. In other words, the data transmission method **300** comprises the communication interface **110,** which is used to initiate the communication session (or connection establishment) with a communication device **112.** Moreover, during the initiation of the communication session, the communication parameters are defined by the data transmission controller **102,** where the communication parameters include the field size of the fields **108A** to **108N** and the frame-type order of the predefined number of frames, such as the frame **106A** and **106B.** Therefore, the field size of the fields **108A** to **108N** and the frame-type order of the frames could be fixed to the indicated size, such as negotiated to a smaller value based on the communication parameters during initiation of the communication session with the communication device **112.** The communication parameters are further used to negotiate the predefined number of frames, such as the frame **106A** and the frame **106B** to a limited (or constant) number of frames on connection establishment with the communication device **112.** Beneficially in comparison with the conventional QUIC protocol, the predefined number of frames in the modified QUIC protocol are constant after connection establishment negotiation, and also remain constant during the lifetime of the connection.

In accordance with an embodiment, the data transmission method **300** further comprises executing an application-program interface (API) with two modes: a stream-aware mode and a stream-unaware mode. In other words, the data transmission method **300** further comprises executing the application-program interface. Moreover, the application-program interface enables two modes of operation, such as the stream-aware mode and the stream-unaware mode. In an example, the stream-aware mode is aware of QUIC streams (e.g., QUIC streams of one or more data transmission packets **104A** to **104N**) and also allows an application (e.g., a web application) to define multiple QUIC streams. In contrast, the stream-unaware mode is not aware of the QUIC streams.

In accordance with an embodiment, the data transmission method **300** further comprises handling at least some of the generation in hardware. In other words, the data transmission method **300** further comprises handling at least some of the generation in hardware Offload variant of the modified QUIC protocol. Thus, the data transmission method **300** defines possible extensions to the conventional QUIC protocol (or a next-generation of transmission control protocol) that make it even more versatile in hardware implementations.

In accordance with an embodiment, the data transmission method **300** further comprises receiving a data transmission packet and parsing the received data transmission packet in a hardware. In other words, the data transmission method **300** further comprises receiving the data transmission packet, such as the data transmission packet **104A** from a communication device such as communication device **112.** Optionally, the beginning of the received data transmission packet includes all the headers and makes the data transmission method **300** hardware-oriented. Moreover, the data transmission method **300** defines a subset of the QUIC protocol that makes it hardware-friendly.

In accordance with an embodiment, a computer-readable medium carrying computer instructions that when loaded into and executed by a control circuitry **114** of a data transmission controller **102** enables the data transmission controller **102** to implement the data transmission method **300.** In one aspect, a computer program product is provided comprising a non-transitory computer-readable medium having computer instructions stored thereon, the computer instructions being executable by the data transmission controller **102** to execute the data transmission method **300.** Examples of implementation of the non-transitory computer-readable medium include, but is not limited to, Electrically Erasable Programmable Read-Only Memory (EEPROM), Random Access Memory (RAM), Read-Only Memory (ROM), Hard Disk Drive (HDD), Flash memory, a Secure Digital (SD) card, Solid-State Drive (SSD), a computer-readable storage medium, and/or CPU cache memory. The computer-readable medium for providing a non-transient memory may include, but is not limited to, an electronic storage device, a magnetic storage device, an optical storage device, an electromagnetic storage device, a semiconductor storage device, or any suitable combination of the foregoing.

Therefore, the data transmission method **300** uses a subset of the functionality of the QUIC protocol in a way that enables hardware offloading of the QUIC protocol. As the data transmission method **300** is configured to generate one or more data transmission packets **104A** to **104N** according to the modified QUIC (or OQUIC) protocol. Thus the data transmission method **300** does not need requires expensive resource consumption to run the modified QUIC protocol. Further, due to the fixed size of the fields **108A** to **108N,** the data transmission method **300** does not require the complex iterative parsing in order to process the one or more fields **108A** to **108N,** and also does not need to keep a per-connection state that includes the length of the respective fields **108A** to **108N.** The hardware Offloading of the QUIC protocol is used for remote direct memory access over QUIC elastic transport (RoQET), which is an alternative to remote direct memory access (RDMA)-over-converged-Ethernet (RoCE) that provides reliability and low latency and can be deployed over a wide area network (WAN). Another potential use case of the hardware Offloading of the QUIC protocol is non-volatile-memory-express (NVMe)-over-QUIC, which may be an alternative for non-volatile-memory-express (NVMe)-over-fabric, and NVMe-over-TCP which suffers from the TCP issued that QUIC came to solve..

The present disclosure provides efficient hardware implementations of the modified QUIC protocol. The data transmission method **300** further allows to significantly improve the performance of servers and hosts that run the modified QUIC protocol and provides a generic application-program interface to run various applications over hardware offloaded implementation. Thus, the present data transmission method **300** implementing the hardware Offload variant of the QUIC protocol (also termed as OQUIC) may potentially be standardized in the Internet Engineering Task Force (IETF) which may further influence and enhance a way people design, use, and manage the Internet.

FIG. 4 is a flowchart of a data transmission method for generating one or more data transmission packets according to the modified QUIC protocol, in accordance with another embodiment of the present disclosure. FIG. 4 is shown in conjunction with elements from FIGs. 1A, 1B, and 2. With respect to FIG. 4, there is shown a data transmission method **400** for generating one or more data transmission packets **104A** to **104N** according to the modified QUIC protocol. The data transmission method **400** includes steps **402** and **404.**

In another aspect, the present disclosure provides a data transmission method **400** for generating one or more data transmission packets **104A** to **104N** according to the modified QUIC protocol, wherein the method comprises **400:** receiving incoming data **202,** the incoming data **202** comprising transmission control protocol (TCP) instructions **204** or user datagram protocol (UDP) instructions **206** and instructions **210** according to an application-program interface (API) **208;** generating one or more data transmission packets **104A** to **104N** for the modified QUIC protocol according to the transmission control protocol (TCP) instructions **204** or user datagram protocol (UDP) instructions **206** and based on the instructions **210** according to the application-program interface (API) **208,** wherein the application-program interface (API) **208** comprises two modes: a stream-aware mode **212** and a stream-unaware mode **214.**

The present disclosure provides the data transmission method **400** for generating one or more data transmission packets **104A** to **104N** according to the modified QUIC protocol. As the data transmission method **400** is configured to generate one or more data transmission packets according to the modified QUIC protocol. Thus the data transmission method **400** does not need require expensive resource consumption to run the modified QUIC protocol. Moreover, the data transmission method **400** uses a subset of the functionality of QUIC in a way that enables hardware Offloading of the QUIC protocol.

At step **402,** the data transmission method **400** comprises receiving incoming data **202,** the incoming data **202** comprising transmission control protocol (TCP) instructions **204** or user datagram protocol (UDP) instructions **206,** and instructions **210** according to an application-program interface (API) **208.** In other words, the data transmission method **400** comprises receiving the incoming data **202,** which includes the transmission control protocol instructions **204** (or user datagram protocol instructions **206**), and the instructions **210** from the application-program interface **208.** In an example, the incoming data **202** is received from a network sniffer such as wire, where both the stream aware and stream unaware modes are OQUIC packets, such as the data transmission packets **104A** to **104N.** Further, the conversion of the incoming data **202** is done on a software/firmware/hardware (SW/FW/HW) layer that changes the transmission control protocol instructions **204** to OQUIC and on the network sniffer the packets, such as the data transmission packets **104A** to **104N** will look as OQUIC packets. In other words, on the network sniffer (or wire), the incoming data **202** always includes OQUIC packets. In an implementation, the incoming data **202** includes a field size for the fields **108A** to **108N** and a predefined frame-type order for the frames, which is used by the data transmission method **400** to generate one or more data transmission packets **104A** to **104N.**

At step **404,** the data transmission method **400** comprises generating one or more data transmission packets **104A** to **104N** for the modified QUIC protocol according to the transmission control protocol instructions **204** (or user datagram protocol instructions **206**) and based on the instructions **210** according to the application-program interface (API) **208,** wherein the application-program interface (API) **208** comprises two modes: a stream-aware mode **212** and a stream-unaware mode **214.** In other words, the data transmission method **400** comprises receiving the incoming data **202** and generating one or more data transmission packets **104A** to **104N** for the modified QUIC protocol, such as to generate the data transmission packet **104A** for the modified QUIC protocol. As the incoming data **202** includes the transmission control protocol instructions **204** (or user datagram protocol instructions **206**) and the instructions **210** from the application-program interface **208.** Therefore, the data transmission method **400** generates one or more data transmission packets **104A** to **104N** for the modified QUIC protocol according to the transmission control protocol instructions **204** (or user datagram protocol instructions **206**), and also based on instructions **210** from the application-program interface **208.** In an implementation, the application-program interface **208** is executed by the data transmission method **400,** and the application-program interface **208** includes the stream-aware mode **212** and the stream-unaware mode **214.** Therefore, the data transmission method **400** uses the modified QUIC protocol, such as the Offload variant of the QUIC protocol, which may be useful in performance sensitive environments, for example, hypertext transfer protocol secure (HTTPS) web servers. In addition, the data transmission method **400** may be used for non-HTTP applications also, that run over the conventional QUIC protocol as well. Thus, the data transmission method **400** provides and enables the generic socket-like application-program interface **208,** which can enable applications to run over the modified QUIC protocol as a replacement to the conventional transmission control protocol (TCP), such as for the applications that require efficient resource consumption by using hardware offloading.

In an implementation, the data transmission method **400** executes the application-program interface **208** that may be designed in a versatile way that allows various application types to run over the Offload variant of the QUIC protocol. Examples of the application types include but are not limited to remote direct memory access (RDMA) and various other applications that are either from the stream-aware mode **212** or from the stream-unaware mode **214.** Since the QUIC streams are a notion that does not exist in transmission control protocol, thus it is expected that legacy applications may need to run transparently over the data transmission method **400** with the Offload variant of the QUIC protocol in a stream-unaware manner. Moreover, the legacy applications, such as a secure shell protocol (SSH) (or file transfer protocol (FTP)) may run over the stream-unaware application-program interface in a way that allows smooth migration from existing implementations.

As the data transmission method **400** is configured to generate one or more data transmission packets **104A** to **104N** for the modified QUIC protocol. Thus, the data transmission method **400** does not need requires expensive resource consumption to run the modified QUIC protocol. Moreover, the data transmission method **400** uses a subset of the functionality of the QUIC protocol in a way that enables hardware offloading of the QUIC protocol.

In accordance with an embodiment, a computer-readable medium carrying computer instructions that when loaded into and executed by a control circuitry **114** of a data transmission controller **102** enables the data transmission controller **102** to implement the data transmission method **400.** In one aspect, a computer program product is provided comprising a non-transitory computer-readable medium having computer instructions stored thereon, the computer instructions being executable by the data transmission controller **102** to execute the data transmission method **400.** Examples of implementation of the non-transitory computer-readable medium include, but is not limited to, Electrically Erasable Programmable Read-Only Memory (EEPROM), Random Access Memory (RAM), Read-Only Memory (ROM), Hard Disk Drive (HDD), Flash memory, a Secure Digital (SD) card, Solid-State Drive (SSD), a computer-readable storage medium, and/or CPU cache memory. The computer-readable medium for providing a non-transient memory may include, but is not limited to, an electronic storage device, a magnetic storage device, an optical storage device, an electromagnetic storage device, a semiconductor storage device, or any suitable combination of the foregoing.

Therefore, the data transmission method **400** uses a subset of the functionality of the QUIC protocol in a way that enables hardware offloading of the QUIC protocol. The present disclosure provides efficient hardware implementations of the modified QUIC protocol. The data transmission method **400** further allows to significantly improve the performance of servers and hosts that run the modified QUIC protocol and provides a generic application-program interface **208** to run various applications over hardware offloaded implementation. Thus, the present data transmission method **400** implementing the hardware Offload variant of the QUIC protocol (also termed as OQUIC) may potentially be standardized in the Internet Engineering Task Force (IETF) which may further influence and enhance a way people design, use, and manage the Internet.

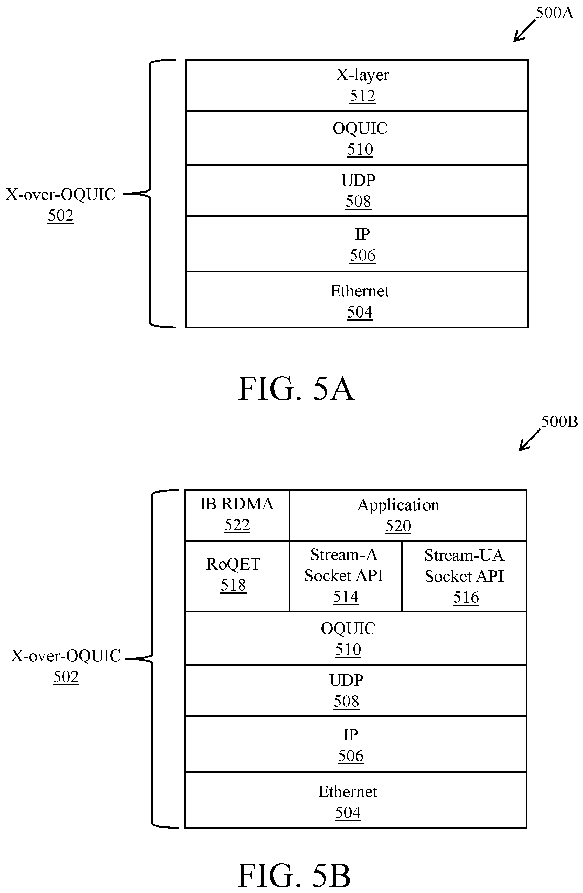

FIG. 5A is an illustration of an X-over-Offload variant of QUIC (OQUIC) application-program interface, in accordance with an embodiment of the present disclosure. FIG.5A is shown in conjunction with elements from the FIGs. 1A, 1B and 2A. With respect to FIG.5A, there is shown an illustration **500A** of an X-over-Offload variant of QUIC (OQUIC) application-program interface **502** as a generic application-program interface. The X-over-Offload variant of QUIC application-program interface **502** includes an Ethernet layer **504,** an internet protocol (IP) layer **506,** a user datagram protocol (UDP) layer **508,** Offload variant of QUIC layer **510,** and an X-layer **512.**

The Ethernet layer **504** provides a communication interface that is used to initiate a communication session with a communication device. The internet protocol layer **506** and the user datagram protocol layer **508** are communications protocols. The internet protocol layer **506** is used to encapsulate and deliver data from one point to other points, and the user datagram protocol layer **508** is used to establish low-latency and loss tolerating connections between applications on the internet. The internet protocol layer **506** may also be referred to as a transport control protocol.

The Offload variant of QUIC layer **510** is a subset of the QUIC protocol that makes it hardware-friendly. The Offload variant of QUIC layer **510** defines possible extensions to the conventional QUIC protocol that make it even more versatile in hardware implementations. The X-layer **512** corresponds to an application (e.g., a web application).

The X-over-Offload variant of QUIC application-program interface **502** corresponds to a generic socket-like application-program interface, which can enable applications to run over the modified QUIC protocol as a replacement to a transport control protocol. Therefore, the X-over-Offload variant of QUIC application-program interface **502** offloaded the expensive functionality (i.e., resource consumption) to hardware (e.g., a host that run the modified QUIC protocol).

FIG. 5B is an illustration of an X-over-Offload variant of QUIC (OQUIC) application-program interface, in accordance with another embodiment of the present disclosure. FIG.5B is shown in conjunction with elements from the FIGs. 1A, 1B, 2A, and FIG. 5A. With respect to FIG. 5B, there is shown an illustration **500B** of the X-over-Offload variant of QUIC (OQUIC) application-program interface **502 as** the generic application-program interface. The X-over-Offload variant of QUIC application-program interface **502** includes a stream-aware socket application-program interface (API) **514,** a stream-unaware socket application-program interface **516,** InfiniBand (IB) remote direct memory access (RDMA) **518,** an application **520,** remote direct memory access over QUIC elastic transport (RoQET) **522,** the Ethernet layer **504,** the internet protocol (IP) layer **506,** the user datagram protocol (UDP) layer **508,** the Offload variant of QUIC layer **510,** and the X-layer **512.**

The stream-aware socket application-program interface **514** is aware of QUIC streams and allows the application, such as the application **520,** to define multiple QUIC streams. However, the stream-unaware socket application-program interface **516** is not aware of the QUIC streams and does not allow the application, such as the application **520,** to define multiple QUIC streams. The stream-unaware socket application-program interface **516** further have a layer that translates from TCP/UDP socket API to OQUIC.

The InfiniBand remote direct memory access **518** corresponds to an implementation of the remote direct memory access (RDMA) technology using the InfiniBand network. The remote direct memory access over QUIC elastic transport (RoQET) **522** is an alternative to remote direct memory access (RDMA)-over-converged-ethernet (RoCE) that provides reliability and low latency and can be deployed over a wide area network (WAN)

The X-over-Offload variant of QUIC application-program interface **502** provides the hardware offloading of the QUIC protocol, which is used for remote direct memory access over QUIC elastic transport (RoQET) **522.** Another potential use case of the X-over-Offload variant of QUIC application-program interface **502** is non-volatile-memory-express (NVMe)-over-QUIC, which may be an alternative for non-volatile-memory-express (NVMe)-over-fabric, and NVMe-over-TCP which suffers from the TCP issue that QUIC came to solve.

In an implementation, the X-over-Offload variant of QUIC application-program interface **502** may be designed in a versatile way that allows various application types to run over X-over-Offload variant of QUIC application-program interface **502.** Examples of the application types include but not limited to, a remote direct memory access (or InfiniBand remote direct memory access **518**), and various other applications that are based on the stream-aware socket application-program interface **514** and the stream-unaware socket application-program interface **516.** Since QUIC streams are a notion that does not exist in the transport control protocol, therefore, it is expected that legacy applications may need to run transparently over the X-over-Offload variant of QUIC application-program interface **502** in a stream-unaware manner, such as in the stream-unaware socket application-program interface **516.** However, new applications may benefit from the use of multiple streams per connection. Therefore, the present disclosure provides the generic application-program interface, such as the X-over-Offload variant of QUIC application-program interface **502** for running various applications over hardware offloaded implementation.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural. The word "exemplary" is used herein to mean "serving as an example, instance or illustration". Any embodiment described as "exemplary" is not necessarily to be construed as preferred or advantageous over other embodiments or to exclude the incorporation of features from other embodiments. The word "optionally" is used herein to mean "is provided in some embodiments and not provided in other embodiments". It is appreciated that certain features of the present disclosure, which are, for clarity, described in the context of separate embodiments, may also be provided in combination in a single embodiment. Conversely, various features of the invention, which are, for brevity, described in the context of a single embodiment, may also be provided separately or in any suitable combination or as suitable in any other described embodiment of the disclosure.

## Claims

1. A data transmission controller (102), wherein the data transmission controller (102) is configured to:
generate one or more data transmission packets (104A to 104N) according to a modified QUIC protocol, by
generating one or more fields (108A to 108N) in the one or more data transmission packets (104A to 104N) to have a fixed field-size, and
generating a predefined number of frames of different frame-types in a predefined frame-type order in the one or more data transmission packets (104A to 104N),
wherein the data transmission controller (102) is further configured to:
limit a number of frames per data transmission packet in the one or more data transmission packets (104A to 104N) to a defined maximum number of frames per data transmission packet, and
set the number of frames per data transmission packet to the defined maximum number of frames per data transmission packet.

2. The data transmission controller (102) according to any preceding claim, wherein the data transmission controller (102) is further configured to set all fields of a field-type to fixed field-type size.

3. The data transmission controller (102) according to any preceding claim, wherein the data transmission controller (102) is further configured to include a version number in the one or more data transmission packets (104A to 104N), the version number indicating a protocol version to be used.

4. The data transmission controller (102) according to any preceding claim, wherein the data transmission controller (102) is further configured to include a mode in the one or more data transmission packets (104A to 104N), the mode indicating whether the data transmission packets (104A to 104N) are to be encrypted or not.

5. The data transmission controller (102) according to any preceding claim further comprising a communication interface (110), wherein the data transmission controller (102) is further configured to initiate a communication session with a communication device (112) over the communication interface (110) and to define communication parameters during initiation of the communication session, wherein the communication parameters comprises a field size and a frame-type order, and wherein the predefined number of frames is a limited number of frames negotiated on connection establishment with the communication device (112) based on the communication parameters.

6. The data transmission controller (102) according to claim 5, wherein the communication parameters further comprises a maximum number of frames per data transmission packet.

7. The data transmission controller (102) according to claim 5 or 6, wherein the field size comprises one or more field-type sizes.

8. The data transmission controller (102) according to any of claims 5 - 7, wherein at least one of the field-type sizes is zero.

9. The data transmission controller (102) according to any of claims 5 - 8, wherein the communication parameters further comprises a parsing depth.

10. A data transmission method (300) performed by a data transmission controller (102) for generating one or more data transmission packets (104A to 104N), comprises:
generating the one or more data transmission packets (104A to 104N) according to a modified QUIC protocol, by
generating one or more fields in the one or more data transmission packets (104A to 104N) to have a fixed field-size,
generating a predefined number of frames of different frame-types in a predefined frame-type order in the one or more data transmission packets (104A to 104N),
limiting a number of frames per data transmission packet in the one or more data transmission packets (104A to 104N) to a defined maximum number of frames per data transmission packet, and
setting the number of frames per data transmission packet to the defined maximum number of frames per data transmission packet.

11. A computer-readable medium carrying computer instructions that when loaded into and executed by a control circuitry (114) of a data transmission controller (102) enables the data transmission controller (102) to implement the data transmission method (400) according claim 10.

## Patentansprüche

1. Datenübertragungssteuerung (102), wobei die Datenübertragungssteuerung (102) ausgelegt ist zum:
Erzeugen eines oder mehrerer Datenübertragungspakete (104A bis 104N) gemäß einem modifizierten QUIC-Protokoll durch
Erzeugen eines oder mehrerer Felder (108A bis 108N) in den ein oder mehreren Datenübertragungspaketen (104A bis 104N), so dass sie eine feste Feldgröße haben, und
Erzeugen einer vordefinierten Anzahl von Rahmen unterschiedlicher Rahmentypen in einer vordefinierten Rahmentyp-Reihenfolge in den ein oder mehreren Datenübertragungspaketen (104A bis 104N),
wobei die Datenübertragungssteuerung (102) ferner ausgelegt ist zum:
Begrenzen einer Anzahl von Rahmen pro Datenübertragungspaket in den ein oder mehreren Datenübertragungspaketen (104A bis 104N) auf eine definierte maximale Anzahl von Rahmen pro Datenübertragungspaket und
Einstellen der Anzahl von Rahmen pro Datenübertragungspaket auf die definierte maximale Anzahl von Rahmen pro Datenübertragungspaket.

2. Datenübertragungssteuerung (102) gemäß einem der vorhergehenden Ansprüche, wobei die Datenübertragungssteuerung (102) ferner dafür ausgelegt ist, alle Felder eines Feldtyps auf eine feste Feldtypgröße einzustellen.

3. Datenübertragungssteuerung (102) gemäß einem der vorhergehenden Ansprüche, wobei die Datenübertragungssteuerung (102) ferner dafür ausgelegt ist, eine Versionsnummer in den ein oder mehreren Datenübertragungspaketen (104A bis 104N) aufzuweisen, wobei die Versionsnummer eine zu verwendende Protokollversion angibt.

4. Datenübertragungssteuerung (102) gemäß einem der vorhergehenden Ansprüche, wobei die Datenübertragungssteuerung (102) ferner dafür ausgelegt ist, einen Modus in den ein oder mehreren Datenübertragungspaketen (104A bis 104N) aufzuweisen, wobei der Modus angibt, ob die Datenübertragungspakete (104A bis 104N) verschlüsselt werden sollen oder nicht.

5. Datenübertragungssteuerung (102) gemäß einem der vorhergehenden Ansprüche, ferner eine Kommunikationsschnittstelle (110) umfassend, wobei die Datenübertragungssteuerung (102) ferner dafür ausgelegt ist, eine Kommunikationssitzung mit einer Kommunikationsvorrichtung (112) über die Kommunikationsschnittstelle (110) zu initiieren und während der Initiierung der Kommunikationssitzung Kommunikationsparameter zu definieren, wobei die Kommunikationsparameter eine Feldgröße und eine Rahmentyp-Reihenfolge umfassen und wobei die vordefinierte Anzahl von Rahmen eine begrenzte Anzahl von Rahmen ist, die beim Verbindungsaufbau mit der Kommunikationsvorrichtung (112) ausgehandelt wird, basierend auf den Kommunikationsparametern.

6. Datenübertragungssteuerung (102) gemäß Anspruch 5, wobei die Kommunikationsparameter ferner eine maximale Anzahl von Rahmen pro Datenübertragungspaket umfassen.

7. Datenübertragungssteuerung (102) gemäß Anspruch 5 oder 6, wobei die Feldgröße eine oder mehrere Feldtypgrößen umfasst.

8. Datenübertragungssteuerung (102) gemäß einem der Ansprüche 5-7, wobei mindestens eine der Feldtypgrößen Null ist.

9. Datenübertragungssteuerung (102) gemäß einem der Ansprüche 5-8, wobei die Kommunikationsparameter außerdem eine Analysentiefe umfassen.

10. Datenübertragungsverfahren (300), das durch eine Datenübertragungssteuerung (102) durchgeführt wird, um ein oder mehrere Datenübertragungspakete (104A bis 104N) zu erzeugen, das umfasst:
Erzeugen eines oder mehrerer Datenübertragungspakete (104A bis 104N) gemäß einem modifizierten QUIC-Protokoll durch
Erzeugen eines oder mehrerer Felder in den ein oder mehreren Datenübertragungspaketen (104A bis 104N), so dass sie eine feste Feldgröße haben,
Erzeugen einer vordefinierten Anzahl von Rahmen unterschiedlicher Rahmentypen in einer vordefinierten Rahmentyp-Reihenfolge in den ein oder mehreren Datenübertragungspaketen (104A bis 104N),
Begrenzen einer Anzahl von Rahmen pro Datenübertragungspaket in den ein oder mehreren Datenübertragungspaketen (104A bis 104N) auf eine definierte maximale Anzahl von Rahmen pro Datenübertragungspaket und
Einstellen der Anzahl von Rahmen pro Datenübertragungspaket auf die definierte maximale Anzahl von Rahmen pro Datenübertragungspaket.

11. Computerlesbares Medium, das Computeranweisungen enthält, die, wenn sie in eine Steuerschaltung (114) einer Datenübertragungssteuerung (102) geladen und durch diese ausgeführt werden, die Datenübertragungssteuerung (102) in die Lage versetzen, das Datenübertragungsverfahren (400) gemäß Anspruch 10 zu implementieren.

## Revendications

1. Contrôleur de transmission de données (102), le contrôleur de transmission de données (102) étant configuré pour :
générer un ou plusieurs paquets de transmission de données (104A à 104N) selon un protocole QUIC modifié,
en générant un ou plusieurs champs (108A à 108N) dans les un ou plusieurs paquets de transmission de données (104A à 104N) afin qu'ils aient une taille de champ fixe, et
en générant un nombre prédéfini de trames de différents types de trames dans un ordre de types de trames prédéfini dans les un ou plusieurs paquets de transmission de données (104A à 104N),
le contrôleur de transmission de données (102) étant en outre configuré pour :
limiter le nombre de trames par paquet de transmission de données dans les un ou plusieurs paquets de transmission de données (104A à 104N) à un nombre maximal défini de trames par paquet de transmission de données, et
définir le nombre de trames par paquet de transmission de données au nombre maximal défini de trames par paquet de transmission de données.

2. Contrôleur de transmission de données (102) selon l'une quelconque des revendications précédentes, dans lequel le contrôleur de transmission de données (102) est en outre configuré pour définir tous les champs d'un type de champ à une taille de type de champ fixe.

3. Contrôleur de transmission de données (102) selon l'une quelconque des revendications précédentes, dans lequel le contrôleur de transmission de données (102) est en outre configuré pour inclure un numéro de version dans les un ou plusieurs paquets de transmission de données (104A à 104N), le numéro de version indiquant une version de protocole à utiliser.

4. Contrôleur de transmission de données (102) selon l'une quelconque des revendications précédentes, dans lequel le contrôleur de transmission de données (102) est en outre configuré pour inclure un mode dans les un ou plusieurs paquets de transmission de données (104A à 104N), le mode indiquant si les paquets de transmission de données (104A à 104N) doivent être cryptés ou non.

5. Contrôleur de transmission de données (102) selon l'une quelconque des revendications précédentes, comprenant en outre une interface de communication (110), le contrôleur de transmission de données (102) étant en outre configuré pour initier une session de communication avec un dispositif de communication (112) par l'intermédiaire de l'interface de communication (110) et pour définir des paramètres de communication pendant le lancement de la session de communication, où les paramètres de communication comprennent une taille de champ et un ordre de type de trame, et où le nombre prédéfini de trames est un nombre limité de trames négocié lors de l'établissement de la connexion avec le dispositif de communication (112) sur la base des paramètres de communication.

6. Contrôleur de transmission de données (102) selon la revendication 5, dans lequel les paramètres de communication comprennent en outre un nombre maximal de trames par paquet de transmission de données.

7. Contrôleur de transmission de données (102) selon la revendication 5 ou la revendication 6, dans lequel la taille de champ comprend une ou plusieurs tailles de type de champ.

8. Contrôleur de transmission de données (102) selon l'une quelconque des revendications 5 à 7, dans lequel au moins l'une des tailles de type de champ est zéro.

9. Contrôleur de transmission de données (102) selon l'une quelconque des revendications 5 à 8, dans lequel les paramètres de communication comprennent en outre une profondeur d'analyse.

10. Procédé de transmission de données (300) exécuté par un contrôleur de transmission de données (102) pour générer un ou plusieurs paquets de transmission de données (104A à 104N), comprenant l'étape suivante :
générer les un ou plusieurs paquets de transmission de données (104A à 104N) selon un protocole QUIC modifié,
en générant un ou plusieurs champs dans les un ou plusieurs paquets de transmission de données (104A à 104N) afin qu'ils aient une taille de champ fixe,
en générant un nombre prédéfini de trames de différents types de trames dans un ordre de types de trames prédéfini dans les un ou plusieurs paquets de transmission de données (104A à 104N),
en limitant le nombre de trames par paquet de transmission de données dans les un ou plusieurs paquets de transmission de données (104A à 104N) à un nombre maximal défini de trames par paquet de transmission de données, et
en définissant le nombre de trames par paquet de transmission de données au nombre maximal défini de trames par paquet de transmission de données.

11. Support lisible par ordinateur contenant des instructions informatiques qui, lorsqu'elles sont chargées et exécutées dans des circuits de commande (114) d'un contrôleur de transmission de données (102), permettent au contrôleur de transmission de données (102) de mettre en œuvre le procédé de transmission de données (400) selon la revendication 10.
